# EUROPÄISCHE PATENTANMELDUNG

(11) **EP 2 565 693 A1**
(43) Veröffentlichungstag der Anmeldung: **06.03.2013**
(21) Anmeldenummer: 12005278.2
(22) Anmeldetag: 18.07.2012
(51) Int. Cl.: G02B 6/44

(54) **Haltevorrichtung für Glasfaser-Netzverteiler**

(30) Priorität: 29.08.2011 DE 102011111399
(71) Anmelder: Langmatz GmbH, 82467 Garmisch-Partenkirchen (DE)
(72) Erfinder: Schuster, Axel, 82467 Garmisch-Partenkirchen (DE); Bruweleit, Stefan, 82377 Penzberg (DE)
(74) Vertreter: Flosdorff, Jürgen

(57) **Zusammenfassung**

Der Glasfaser-Netzverteiler mit einem Gehäuse, in dem eine Montageplatte angeordnet ist, an der Haltevorrichtung zum Fixieren und Vorsortieren von Glasfaser-Kabeln (Einzeladern) angebracht sind, ist dadurch gekennzeichnet, dass jede Haltevorrichtung ein kastenartiges Rahmenteil aufweist, das zwei mit Abstand sich gegenüberliegende Wände aufweist, die Einbuchtungen an den Rändern haben, die paarweise miteinander fluchten und seitliche Eintrittsöffnungen für ein Glasfaser-Kabel und einen anschließenden Klemmabschnitt für dieses haben, und dass im rechten Winkel zu den Wänden je eine schwenkbare Klappe an dem Rahmenteil befestigt ist, die im geschlossenen Zustand an den festgeklemmten Glasfaser-Kabeln anliegt.

## Beschreibung

Die Erfindung betrifft einen Glasfaser-Netzverteiler mit einem Gehäuse, in dem eine Montageplatte angeordnet ist, an der Haltevorrichtungen zum Fixieren und Vorsortieren von Glasfaser-Kabeln (Einzeladern) angebracht sind.

Der vorliegenden Erfindung liegt die Aufgabe zugrunde, eine Haltevorrichtung zum Sortieren und Fixieren von Glasfaser-Einzeladern anzugeben, mit der diese Arbeit einfach und schnell ausführbar ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht eine Haltevorrichtung für Glasfaser-Kabel vor, die ein kastenartiges Rahmenteil aufweist, das zwei mit Abstand sich gegenüberliegende Wände aufweist, die in der an der Montageplatte befestigten Lage übereinander angeordnet sind. Die obere und die untere Wand haben an den längsgerichteten Rändern eine Mehrzahl von nebeneinander ausgebildeten Einbuchtungen, wobei die Einbuchtungen der oberen Wand mit denjenigen der unteren Wand fluchten. Die Einbuchtungen haben seitliche Eintrittsöffnungen für senkrecht angeordnete Glasfaser-Kabel und einen anschließenden Klemmabschnitt für diese, in den jeweils ein Glasfaser-Kabel hinein gedrückt werden kann.

Das kastenartige Rahmenteil hat keine Seitenwände, sondern statt dessen ist jeweils eine schwenkbare Klappe an den Seiten des Rahmenteils befestigt, die im geschlossenen Zustand die zuvor offenen Seiten des Rahmenteils verschließen und an den Glasfaser-Kabeln anliegen.

Die Glasfaser-Kabel sind auf einfache Weise an dieser Haltevorrichtung zu befestigen, indem sie in die übereinander liegenden Einbuchtungen hinein gedrückt werden, und nach dem Schließen der schwenkbaren Klappen sind die Glasfaser-Kabel sicher gehalten. Dies geschieht alles ohne Zuhilfenahme von Werkzeugen. Die Entnahme von Glasfaser-Kabeln aus dieser Haltevorrichtung ist ebenso einfach.

Weiter wird vorgeschlagen, dass das Rahmenteil eine Rückwand aufweist, die an der Montageplatte befestigt wird. Die Rückwand kann dabei angeschraubt oder beispielsweise mit geeigneten Mitteln eingeclipst werden.

In weiteren Einzelheiten wird vorgeschlagen, dass jede Klappe an dem von der Montageplatte abgewandten Ende einen etwa U-förmig gebogenen Federarm aufweist, der beim Schließen der Klappe von einem Randsteg des Rahmenteils elastisch zusammen gedrückt wird und lösbar einrastet. Der Federarm ist vorteilhafterweise mit einem über das Rahmenteil überstehenden Griffabschnitt versehen, mit dem jede Klappe leicht wieder zu öffnen ist, indem der etwa U-förmige Federarm seitlich ein wenig zusammen gedrückt wird.

Nach einem weiteren Vorschlag der Erfindung ist jede Klappe an ihrem anderen Ende mit einem in Querrichtung verlaufenden, stegförmigen Vorsprung versehen, der in eine Nut in der Rückwand des Rahmenteils lose eingreift, derart, dass die Klappe um den stegförmigen Vorsprung schwenkbar ist. Damit kann das kastenartige Rahmenteil auf einfache Weise mit den beiden Klappen zusammen gesetzt werden, indem diese in den Endabschnitt des kastenartigen Rahmenteils in die dafür vorgesehenen Nuten eingesteckt werden.

Alternativ kann vorgesehen sein, dass die beiden Klappen über Filmscharniere mit dem Rahmenteil verbunden sind.

Die Klappen können unter Vorspannung an den Glasfaser-Kabeln anliegen, so dass die Einzeladern nicht nur in seitlicher Richtung, sondern auch in Längsrichtung fixiert sind. Hierzu trägt auch bei, dass der Klemmabschnitt, in den die Eintrittsöffnung jeder Einbuchtung übergeht, eine Kreisbogenform haben kann, deren Durchmesser geringfügig kleiner ist als der Durchmesser des aufzunehmenden Glasfaser-Kabels. Die Eintrittsöffnung erweitert sich bevorzugt konisch nach außen hin.

Das Rahmenteil und die Klappen der Haltevorrichtung bestehen zweckmäßigerweise aus einem thermoplastischen Kunststoff wie ABS oder PC, ohne dass die Erfindung hierauf beschränkt ist. Die Haltevorrichtung kann kostengünstig im Spritzgussverfahren hergestellt werden.

Weitere Einzelheiten der Erfindung ergeben sich aus der nachfolgenden Beschreibung einer bevorzugten Ausführungsform der Haltevorrichtung für Glasfaser-Kabel, sowie anhand der Zeichnungen. Dabei zeigen:
- Figur 1: eine Montageplatte mit daran befestigten Haltevorrichtungen für Glasfaser-Kabel mit geschlossenen Klappen;

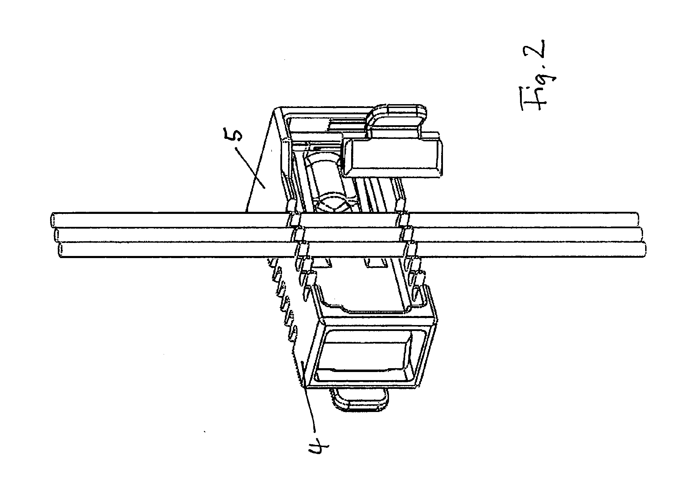

- Figur 2: eine Haltevorrichtung mit einer halb geöffneten Klappe;
- Figur 3: eine Aufsicht auf die Darstellung der Figur 2;

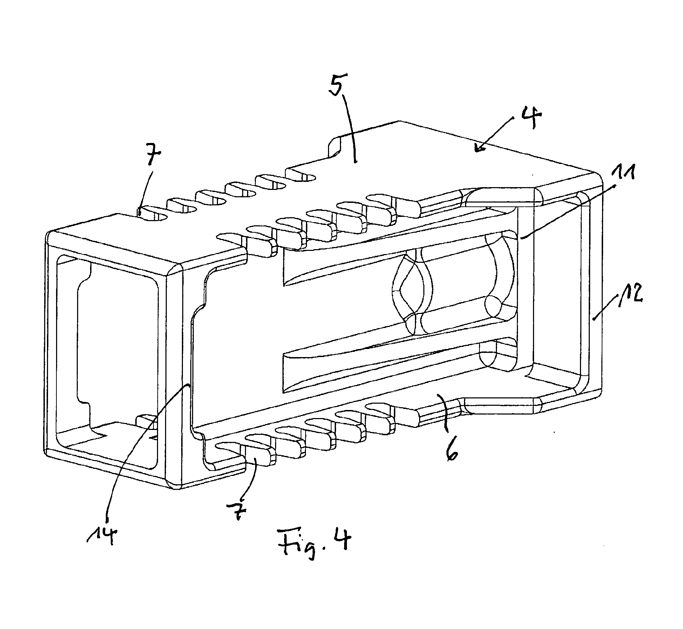

- Figur 4: eine Darstellung des kastenähnlichen Rahmenteils;

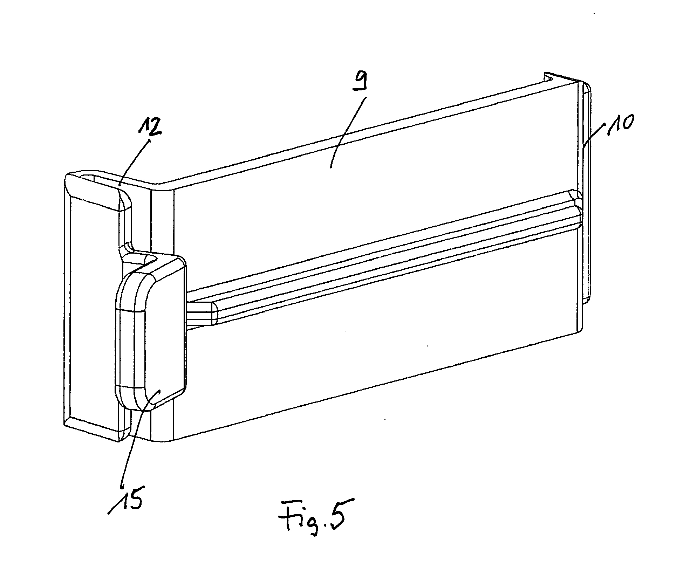

- Figur 5: eine Darstellung einer Klappe;

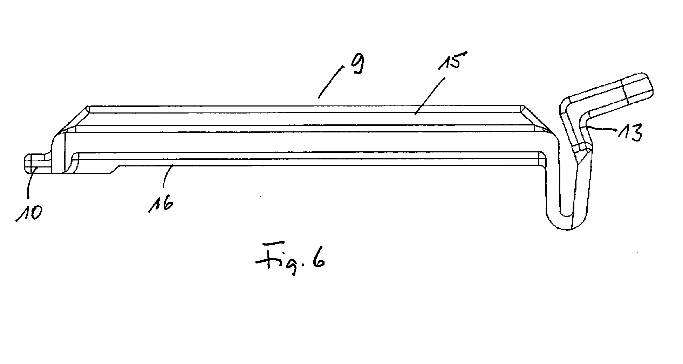

- Figur 6: eine Seitenansicht der Klappe.

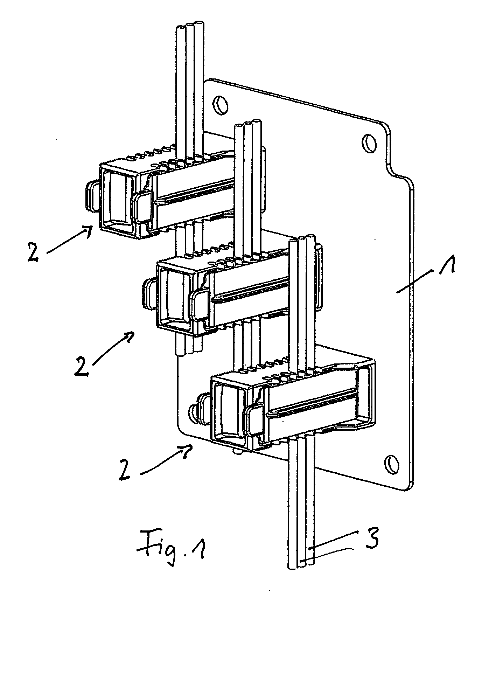

Figur 1 zeigt eine Montageplatte 1, an der drei Haltevorrichtungen 2 für Glasfaser-Einzeladern 3 stufenförmig versetzt befestigt sind. Die Montageplatte 1 ist in einem Glasfaser-Netzverteilerschrank (nicht dargestellt) angebracht.

Die Haltevorrichtung 2 enthält ein im wesentlichen kastenförmiges Rahmenteil 4, das einstückig im Spritzgussverfahren aus einem thermoplastischen Kunststoff hergestellt ist. Das kastenähnliche Rahmenteil 4 enthält in der montierten Lage eine obere Wand 5 und eine untere Wand 6. An den beiden Seiten und an der vorderen Stirnseite ist das Rahmenteil 4 offen.

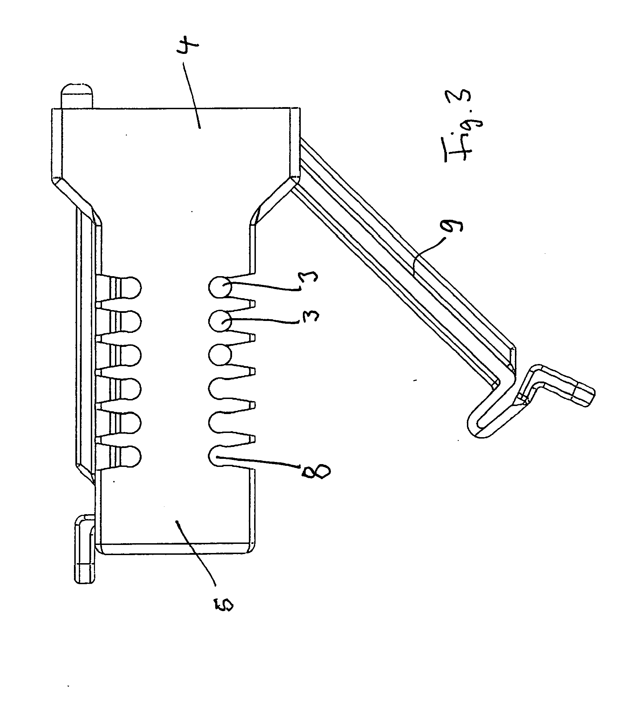

An den beiden Längsrändern enthalten die beiden Wände 5, 6 Einbuchtungen 7, die sich vom Rand her zunächst konisch verengen (Figur 3) und in einen kreisbogenförmigen Klemmabschnitt 8 enden, in den die Kabel 3 in einen leichten Klemmsitz eingedrückt werden können. Die Einbuchtungen 7 der oberen Wand 5 fluchten dabei mit den Einbuchtungen 7 der unteren Wand 6, so dass die Kabel 3 in vertikaler Lage an der Haltevorrichtung befestigbar sind.

An den offenen Seiten des Rahmenteils 4 sind schwenkbare Klappen 9 angebracht. Die Klappen 9 haben an ihrem der Montagewand 1 zugewandten Ende einen quer verlaufenden, stegförmigen Vorsprung 10, mit dem sie lose in eine Nut 11 in der hinteren Stirnwand 12 des Rahmenteils 4 eingesetzt werden. Die Klappen 9 sind um diesen Steg 10 als Drehachse schwenkbar.

An dem anderen Ende hat jede Klappe einen nach innen abgewinkelten U-förmigen Federarm 12, der beim Schließen der Klappe elastisch zusammen gedrückt wird, woraufhin eine Einbuchtung 13 des Federarms 12 hinter einem Quersteg 14 des Rahmenteils 4 einrastet. An dem U-förmigen Federarm 12 ist ein Handgriff 15 angeformt, der über das Rahmenteil 4 hinaus vorsteht und zum Öffnen und Schließen der Klappen 9 ergriffen werden kann.

An der Außenseite der Klappen 9 befindet sich jeweils eine mittige längsgerichtete Verstärkungsrippe 15.

Die geschlossenen Klappen 9 liegen mit einem längsgerichteten inneren Steg 16 unter Vorspannung an den Glasfaser-Kabeln an, so dass diese außerdem zugentlastet sind.

Es wird betont, dass die Erfindung nicht auf die beschriebenen und dargestellten Ausführungsformen beschränkt ist. Vielmehr sind alle offenbarten Merkmale der Ausführungsformen auch einzeln untereinander anders als oben beschrieben miteinander kombinierbar.

## Patentansprüche

1. Glasfaser-Netzverteiler mit einem Gehäuse, in dem eine Montageplatte angeordnet ist, an der Haltevorrichtung zum Fixieren und Vorsortieren von Glasfaser-Kabeln (Einzeladern) angebracht sind,
**dadurch gekennzeichnet,**
**dass** jede Haltevorrichtung (2) ein kastenartiges Rahmenteil (4) aufweist, das zwei mit Abstand sich gegenüberliegende Wände (5,6) aufweist, die Einbuchtungen (7) an den Rändern haben, die paarweise miteinander fluchten und seitliche Eintrittsöffnungen für ein Glasfaser-Kabel (3) und einen anschließenden Klemmabschnitt (8) für dieses haben,
und **dass** im rechten Winkel zu den Wänden (5,6) je eine schwenkbare Klappe (9) an dem Rahmenteil (4) befestigt ist, die im geschlossenen Zustand an den festgeklemmten Glasfaser-Kabeln (3) anliegt.

2. Glasfaser-Netzverteiler nach Anspruch 1,
**dadurch gekennzeichnet,**
**dass** Rahmenteil (4) eine Rückwand (12) aufweist, die an der Montageplatte (1) befestigt ist.

3. Glasfaser-Netzverteiler nach Anspruch 1 oder 2,
**dadurch gekennzeichnet,**
**dass** jede Klappe (9) an einem Ende einen etwa U-förmig gebogenen Federarm (12) aufweist, der im geschlossenen Zustand der Klappe (9) an dem Rahmenteil (4) lösbar einrastet.

4. Glasfaser-Netzverteiler nach Anspruch 3,
**dadurch gekennzeichnet,**
**dass** der Federarm (12) mit einem über das Rahmenteil (4) überstehenden Griffabschnitt (15) versehen ist.

5. Glasfaser-Netzverteiler nach einem der Ansprüche 1 bis 4,
**dadurch gekennzeichnet,**
**dass** jede Klappe (9) an ihrem anderen Ende mit einem Ansatz (10) in eine Nut (11) des Rahmenteils (4) lose eingreift und um den Ansatz (10) schwenkbar ist.

6. Glasfaser-Netzverteiler nach einem der Ansprüche 1 bis 5,
**dadurch gekennzeichnet,**
**dass** die Klappen (9) unter Vorspannung an den Glasfaser-Kabeln (3) anliegen.

7. Glasfaser-Netzverteiler nach einem der Ansprüche 1 bis 6,
**dadurch gekennzeichnet**,
das sich die Eintrittsöffnungen nach innen konisch verengen und in den Klemmabschnitt (8) übergehen, der eine Kreisbogenform hat.

8. Glasfaser-Netzverteiler nach einem der Ansprüche 1 bis 7,
**dadurch gekennzeichnet,**
**dass** das Rahmenteil (4) und die Klappen (9) im Spritzgussverfahren aus einem thermoplastischen Kunststoff hergestellt sind.

9. Haltevorrichtung für Glasfaser-Netzverteiler nach einem der Ansprüche 1 bis 8.
